# EUROPEAN PATENT SPECIFICATION

(11) **EP 3 754 234 B1**
(45) Date of publication and mention of the grant of the patent: **19.10.2022**
(21) Application number: 20179178.7
(22) Date of filing: 10.06.2020
(51) Int. Cl.: F16K 11/065, F16K 31/122

(54) **CHANNEL SWITCHING VALVE**
KANALSCHALTERVENTIL
SOUPAPE DE COMMUTATION DE CANAL

(30) Priority: 20.06.2019 JP 2019114502
(43) Date of publication of application: 23.12.2020
(73) Proprietor: Fujikoki Corporation, Tokyo 158-0082 (JP)
(72) Inventor: KIBUNE, Hitoshi, Tokyo, 1580082 (JP); MORITA, Noriyuki, Tokyo, 1580082 (JP)
(74) Representative: Ter Meer Steinmeister & Partner

(56) References cited:
- CN-A- 109 578 616
- JP-A- 2017 133 619
- JP-A- 2018 044 666
- JP-A- 2019 065 896
- JP-B2- 6 515 154

## Description

### BACKGROUND OF THE INVENTION

### 1. Field of the Invention

The present invention relates to a slide-type channel switching valve.

### 2. Description of the Related Art

Heat-pump cooling and heating system of room air conditioners, car air conditioners, and the like use a channel switching valve that switches the flowing direction of a refrigerant in accordance with switching of cooling and heating operations.

An existing channel switching valve is disclosed in Japanese Unexamined Patent Application Publication No. 2018-44666. As illustrated in Fig. 6, a channel switching valve 901 is a six-way switching valve. The channel switching valve 901 includes a cylindrical valve housing 910 and a valve element 918 disposed in the valve housing 910 so as to be slidable by being pushed by a bracket 953. In the valve housing 910, a first valve seat 913 and a second valve seat 915 facing each other in a direction orthogonal to an axis L are disposed. The first valve seat 913 includes three ports pB, pA, and pF disposed side by side in this order in the direction of the axis L. The second valve seat 915 includes three other ports pC, pD, and pE disposed side by side in this order in the direction of the axis L to face the three ports pB, pA, and pF.

The valve element 918 includes a first U-turn passage 921 that makes two ports among the three port pB, pA, and pF be in communication with each other and a second U-turn passage 922 that makes two ports among the three other ports pC, pD, and pE be in communication with each other. In addition, the valve element 918 includes a first straight passage 936 that makes the port pC and the port pB be in communication with each other and a second straight passage 946 that makes the port pE and the port pF be in communication with each other. The first U-turn passage 921 and the second U-turn passage 922 are disposed side by side in the direction orthogonal to the axis L. The first straight passage 936 and the second straight passage 946 are disposed with the first U-turn passage 921 and the second U-turn passage 922 interposed therebetween in the direction of the axis L.

During a cooling operation, in the channel switching valve 901, the first U-turn passage 921 makes the port pA and the port pB be in communication with each other, the second U-turn passage 922 makes the port pC and the port pD be in communication with each other, and the second straight passages 946 makes the port pE and the port pF be in communication with each other. During a heating operation, in the channel switching valve 901, the first U-turn passage 921 makes the port pA and the port pF be in communication with each other, the second U-turn passage 922 makes the port pE and the port pD be in communication with each other, and the first straight passage 936 makes the port pC and the port pB be in communication with each other.

Further related art is disclosed in the documents JP 2017 133 619 A; JP 2019 065 896 A; CN 109 578 616 A; and JP 6 515 154 B2, which all disclose channel switching valves.

### SUMMARY OF THE INVENTION

The valve element 918 of the aforementioned channel switching valve 901 includes the first U-turn passage 921, the second U-turn passage 922, the first straight passage 936, and the second straight passage 946. In the first U-turn passage 921, a refrigerant having a high pressure flows. In the second U-turn passage 922, a refrigerant having a low pressure flows. In the first straight passage 936 and the second straight passage 946, a refrigerant having a pressure (intermediate pressure) between the high pressure and the low pressure flows. Thus, forces are applied to the valve element 918 from the three refrigerants having different pressures.

However, the three refrigerants having the different pressures flow different passages in the valve element 918, and thus, imbalance is generated between the forces applied to the valve element 918 by the refrigerants. Therefore, imbalance is generated between forces pressing the valve element 918 against the first valve seat 913 and the second valve seat 915, and the valve element 918 is deformed. Consequently, there is a possibility of occurrence of valve leaking as a result of spaces being generated between the valve element 918 and the first valve seat 913 and between the valve element 918 and the second valve seat 915. The bracket 953 pushes portions of a side surface 918a of the valve element 918 comparatively far from the first valve seat 913 and the second valve seat 915. Consequently, a portion of the valve element 918 floats from the first valve seat 913 or the second valve seat 915, and the valve element 918 slides (in other words, "stick slip") on the first valve seat 913 or the second valve seat 915 while being occasionally stuck thereon and generates an abnormal noise. These events lead to degradation of durability of the channel switching valve 901. As a result, sealing performance is degraded, and there is a possibility of occurrence of valve leaking.

Accordingly, it is an object of the present invention to provide a channel switching valve having high sealing performance and capable of effectively suppressing valve leaking.

To achieve the aforementioned object, the invention is represented by the features of claim 1. This includes a channel switching valve that includes a cylindrical valve housing; a first valve seat disposed in the valve housing; a second valve seat disposed in the valve housing to face the first valve seat; and a valve-element unit disposed between the first valve seat and the second valve seat so as to be slidable in a direction of an axis. The valve-element unit includes a U-turn valve element and a straight valve element separate from the U-turn valve element. The U-turn valve element includes a first U-turn passage that makes two ports among a plurality of ports disposed in the first valve seat be in communication with each other and a second U-turn passage that makes two ports among a plurality of ports disposed in the second valve seat be in communication with each other. The straight valve element includes a straight passage that makes a port among the plurality of ports disposed in the first valve seat and a port among the plurality of ports disposed in the second valve seat be in communication with each other.

In the present invention, preferably, the straight valve element includes two straight valve elements disposed with the U-turn valve element interposed therebetween in the direction of the axis.

In the present invention, preferably, a space is disposed between the U-turn valve element and the straight valve element.

In the present invention, the U-turn valve element is spaced from the first valve seat and disposed in contact with the second valve seat.

In the present invention, the channel switching valve includes a bracket that holds the U-turn valve element and the straight valve element, and, the bracket is disposed between the first valve seat and the second valve seat in the direction of the axis and includes a U-turn-valve-element pushing piece projecting to be directed to the second valve seat.

In the present invention, preferably, the straight valve element includes an outer cylinder member, a cylindrical first valve member housed in a first end side of the outer cylinder member and in contact with the first valve seat, a cylindrical second valve member housed in a second end side of the outer cylinder member and constituting the straight passage in cooperation with the first valve member, the cylindrical second valve member being in contact with the second valve seat, and a spring member disposed between the first valve member and the second valve member.

According to the present invention, the valve-element unit includes the U-turn valve element and the straight valve element separate from the U-turn valve element. The U-turn valve element includes the first U-turn passage that makes two ports among the plurality of ports disposed in the first valve seat be in communication with each other and the second U-turn passage that makes two ports among the plurality of ports disposed in the second valve seat be in communication with each other. The straight valve element includes the straight passage that makes a port among the plurality of ports disposed in the first valve seat and a port among the plurality of ports disposed in the second valve seat be in communication with each other. As a result of configuring as above, it is possible to avoid three refrigerants having different pressures from flowing in one of the valve elements. Therefore, it is possible to effectively suppress generation of deformation in valve elements and generation of imbalance between the forces pressing the valve elements against the first valve seat and the second valve seat. Consequently, the channel switching valve according to the present invention increases sealing performance thereof and is enabled to effectively suppress valve leaking. In addition, the channel switching valve according to the present invention is enabled to suppress generation of an abnormal noise caused by stick slip.

### BRIEF DESCRIPTION OF THE DRAWINGS

Fig. 1 is a sectional view of a channel switching valve according to one embodiment of the present invention;
Fig. 2 is another sectional view of the channel switching valve in Fig. 1;
Fig. 3 is an enlarged sectional view of a valve-element unit of the channel switching valve in Fig. 1 and the vicinity thereof;
Figs. 4A, 4B, 4C, and 4D each illustrate a U-turn valve element included in the channel switching valve in Fig. 1;
Figs. 5A, 5B, and 5C each illustrate a bracket included in the channel switching valve in Fig. 1; and

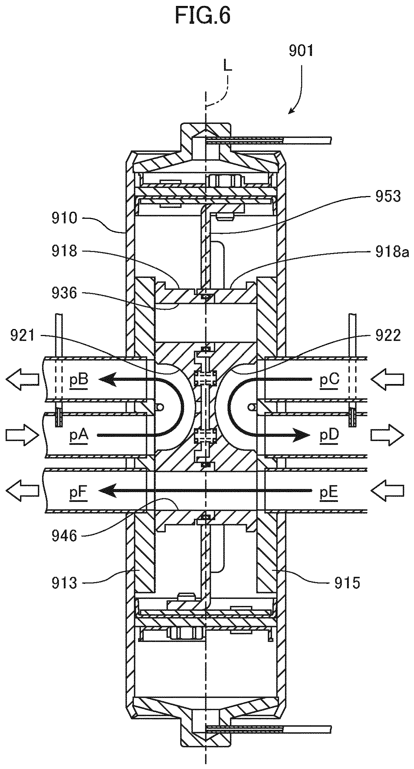

Fig. 6 is a sectional view of an existing channel switching valve.

### DESCRIPTION OF THE PREFERRED EMBODIMENTS

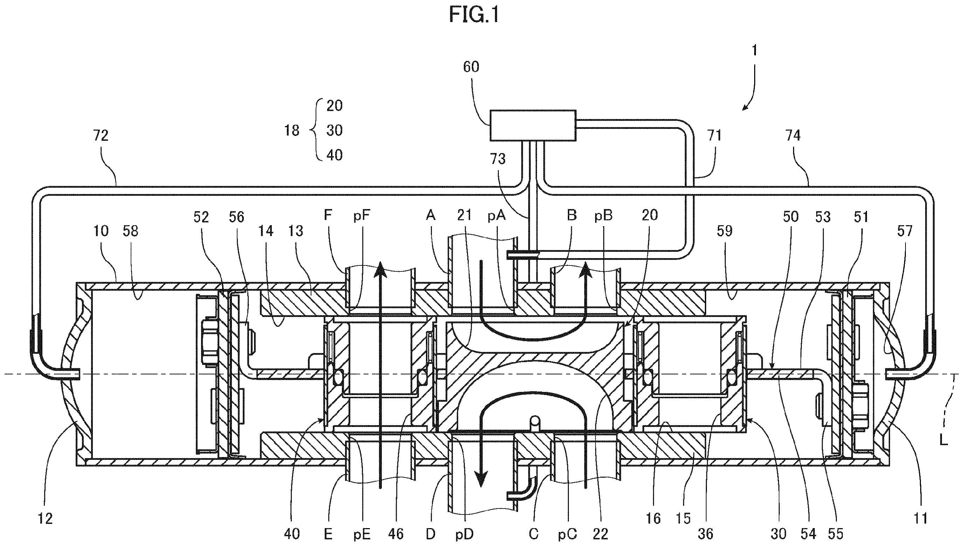

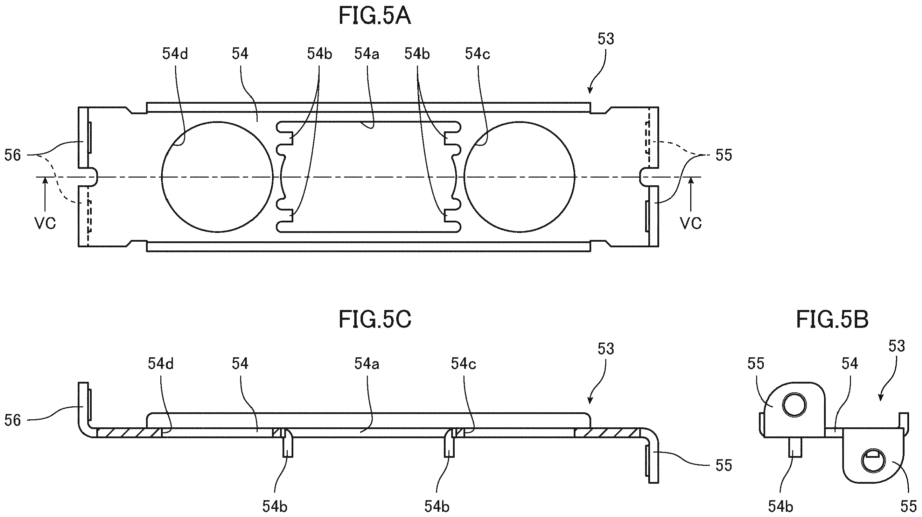

Hereinafter, a channel switching valve according to one embodiment of the present invention will be described with reference to Fig. 1 to Figs. 5A, 5B, and 5C.

The channel switching valve according to the present embodiment is a six-way switching valve and used in a heat-pump cooling and heating system of a room air conditioner, a car air conditioner, or the like to switch the flowing direction of a refrigerant in accordance with switching of cooling and heating operations. The heat-pump cooling and heating system includes, in addition to the channel switching valve of the present embodiment, a compressor, an outdoor heat exchanger, an indoor heat exchanger, a cooling expansion valve, and a heating expansion valve, which are not illustrated.

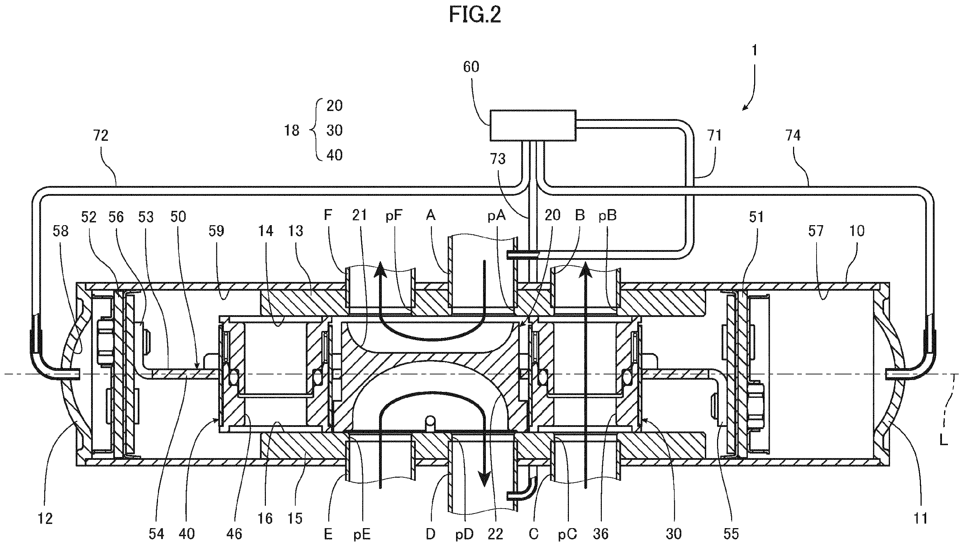

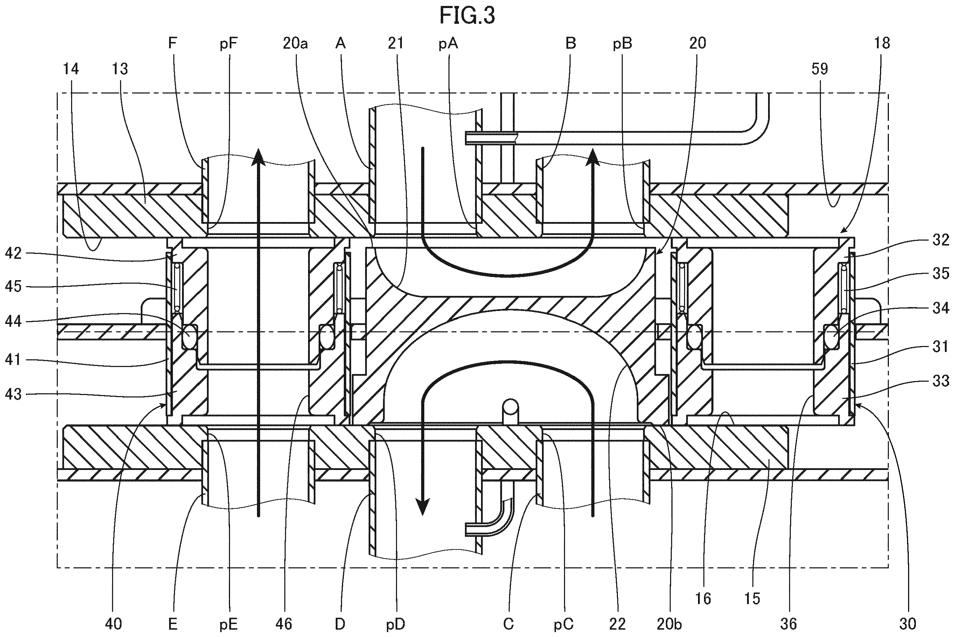

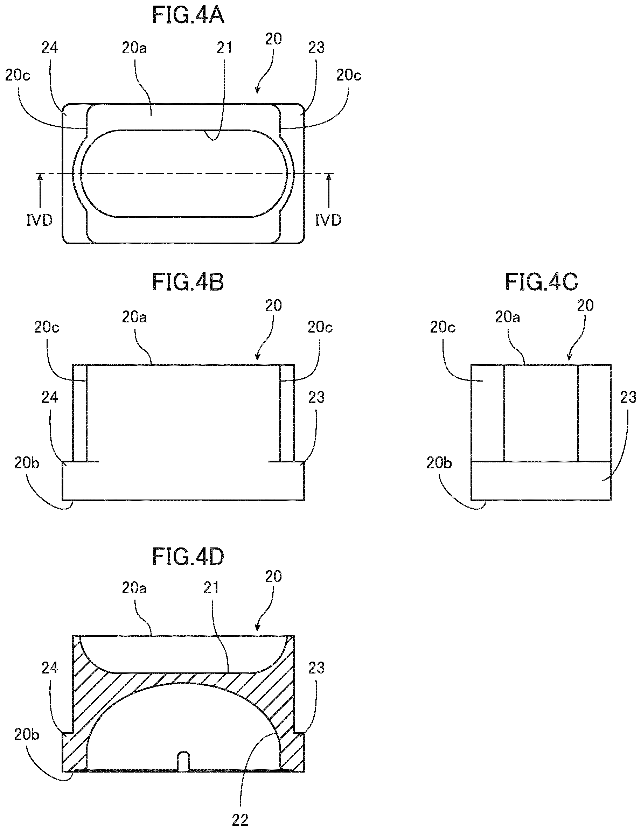

Fig. 1 and Fig. 2 are sectional views of the channel switching valve according to one embodiment of the present invention. Fig. 1 illustrates a state in which a valve-element unit is present in a first stop position (a stop position during a cooling operation). Fig. 2 illustrates a state in which the valve-element unit is present in a second stop position (a stop position during a heating operation). Fig. 3 is an enlarged sectional view of the valve-element unit of the channel switching valve in Fig. 1 and the vicinity thereof. Figs. 4A, 4B, 4C, and 4D each illustrate a U-turn valve element included in the channel switching valve in Fig. 1. Figs. 4A, 4B, 4C, and 4D are a plan view, a front view, a right side view, and a sectional view taken along line IVD-IVD of Fig. 4A, in this order. Figs. 5A, 5B, and 5C each illustrate a bracket included in the channel switching valve in Fig. 1. Figs. 5A, 5B, and 5C are a plan view, a right side view, and a sectional view taken along line VC-VC of Fig. 5A, in this order.

As illustrated in Fig. 1 and Fig. 2, a channel switching valve 1 according to the present embodiment includes a valve housing 10, a valve-element unit 18, a piston section 50, and a pilot section 60.

The valve housing 10 has a cylindrical shape. The axis of the valve housing 10 is in coincidence with an axis L. A end cover 11 is fixed to one end portion (the right end portion in Fig. 1 and Fig. 2) of the valve housing 10. A end cover 12 is fixed to the other end portion (the left end portion in Fig. 1 and Fig. 2) of the valve housing 10. A first valve seat 13 and a second valve seat 15 are disposed in the valve housing 10.

The first valve seat 13 is fixed to the inner circumferential surface of the valve housing 10. The first valve seat 13 has a first valve seat surface 14. The first valve seat surface 14 includes circular ports pB, pA, and pF arranged side by side in this order from the right side toward the left side in Fig. 1 and Fig. 2 in the direction of the axis L. Circular pipe-shaped pipe joint B passes through the valve housing 10 and the pipe joint B is connected to the port pB. Circular pipe-shaped pipe joint A passes through the valve housing 10 and the pipe joint A is connected to the port pA. Circular pipe-shaped pipe joint F passes through the valve housing 10 and the pipe joint F is connected to the port pF.

The second valve seat 15 faces the first valve seat 13 in a direction orthogonal to the axis L. The second valve seat 15 is fixed to the inner circumferential surface of the valve housing 10. The second valve seat 15 has a second valve seat surface 16. The second valve seat surface 16 includes circular ports pC, pD, and pE arranged side by side in this order from the right side toward the left side in Fig. 1 and Fig. 2 in the direction of the axis L. The ports pC, pD, and pE face the ports pB, pA, and pF of the first valve seat 13 in the direction orthogonal to the axis L. Circular pipe-shaped pipe joint C passes through the valve housing 10 and the pipe joint C is connected to the port pC. Circular pipe-shaped pipe joint D passes through the valve housing 10 and the pipe joint D is connected to the port pD. Circular pipe-shaped pipe joint E passes through the valve housing 10 and the pipe joint E is connected to the port pE.

The pipe joint A is connected to a discharge portion of the compressor of the heat-pump cooling and heating system. The pipe joint B is connected to a refrigerant inlet of the outdoor heat exchanger. The pipe joint C is connected to a refrigerant outlet of the indoor heat exchanger via the heating expansion valve. The pipe joint D is connected to a suction portion of the compressor. The pipe joint E is connected to a refrigerant outlet of the outdoor heat exchanger via the cooling expansion valve. The pipe joint F is connected to a refrigerant inlet of the indoor heat exchanger.

The valve-element unit 18 includes a U-turn valve element 20, a first straight valve element 30, and a second straight valve element 40. The U-turn valve element 20, the first straight valve element 30, and the second straight valve element 40 are members separate from each other.

The U-turn valve element 20, the first straight valve element 30, and the second straight valve element 40 are disposed between the first valve seat 13 and the second valve seat 15 so as to be slidable in the direction of the axis L. The U-turn valve element 20, the first straight valve element 30, and the second straight valve element 40 are integrally held by a bracket 53, which is to be described later, of the piston section 50.

As illustrated in Figs. 4A, 4B, 4C, and 4D, the U-turn valve element 20 has a substantially quadrangular prism shape and made of, for example, a synthetic resin. An end surface 20a of the U-turn valve element 20 on the side of the first valve seat 13 is spaced from the first valve seat surface 14. Due to the end surface 20a of the U-turn valve element 20 and the first valve seat surface 14 being spaced from each other, a refrigerant having a high pressure flows into a valve chamber 59 of the valve housing 10 from the pipe joint A through the port pA. The end surface 20a includes a first U-turn passage 21, which is a substantially semi-ellipsoidal body-shaped recess. An end surface 20b of the U-turn valve element 20 on the side of the second valve seat 15 is in contact with the second valve seat surface 16. The end surface 20b includes a second U-turn passage 22, which is a substantially semi-ellipsoidal body-shaped recess. The U-turn valve element 20 includes projections 23 and 24 projecting in the direction of the axis L from an end portion thereof on the side of the second valve seat 15.

As illustrated in Fig. 3, the first straight valve element 30 includes a cylindrical outer cylinder member 31, a cylindrical male-type member 32 as a first valve member, a cylindrical female-type member 33 as a second valve member, an O-ring 34, and a spring member 35. The male-type member 32 is inserted into an end portion of the outer cylinder member 31 on the side of the first valve seat 13. The female-type member 33 is inserted into an end portion of the outer cylinder member 31 on the side of the second valve seat 15. The male-type member 32 and the female-type member 33 are fitted to each other in the outer cylinder member 31. A gap between the male-type member 32 and the female-type member 33 is sealed by the O-ring 34. The male-type member 32 and the female-type member 33 constitute a first straight passage 36. The spring member 35 constituted by a compression coil spring is held between the male-type member 32 and the female-type member 33. The spring member 35 presses the male-type member 32 against the first valve seat surface 14 and presses the female-type member 33 against the second valve seat surface 16.

In the present embodiment, the outer cylinder member 31 is made of a metal. The male-type member 32 and the female-type member 33 are each made of a synthetic resin. Due to the outer cylinder member 31 being made of a metal having high rigidity, the bracket 53 is enabled to push, via the outer cylinder member 31, portions of the male-type member 32 close to the first valve seat 13 and portions of the female-type member 33 close to the second valve seat 15. Therefore, compared with a configuration in which the bracket 53 pushes portions of the male-type member 32 far from the first valve seat 13 and portions of the female-type member 33 far from the second valve seat 15, the channel switching valve 1 is enabled to more effectively suppress the male-type member 32 from floating from the first valve seat surface 14 when sliding and the female-type member 33 from floating from the second valve seat surface 16 when sliding. Consequently, it is possible to enhance the durability of the channel switching valve 1. Moreover, it is possible to suppress generation of an abnormal noise caused by stick slip.

The second straight valve element 40 includes an outer cylinder member 41, a male-type member 42, a female-type member 43, an O-ring 44, and a spring member 45. The male-type member 42 and the female-type member 43 constitute a second straight passage 46. The second straight valve element 40 has a configuration identical to that of the first straight valve element 30, and description thereof is thus omitted.

The valve-element unit 18 is positioned in the first stop position when being slid on the first valve seat surface 14 and on the second valve seat surface 16 in the direction of the axis L to the side of a first working chamber 57, which is to be described later. The valve-element unit 18 is positioned in the second stop position when being slid on the first valve seat surface 14 and on the second valve seat surface 16 in the direction of the axis L to the side of a second working chamber 58, which is to be described later.

When the valve-element unit 18 is present in the first stop position, the first U-turn passage 21 makes the port pA and the port pB among the plurality of ports pB, pA, and pF disposed in the first valve seat 13 be in communication with each other. When the valve-element unit 18 is present in the second stop position, the first U-turn passage 21 makes the port pA and the port pF be in communication with each other.

When the valve-element unit 18 is present in the first stop position, the second U-turn passage 22 makes the port pC and the port pD among the plurality of the ports pC, pD, and pE disposed in the second valve seat 15 be in communication with each other. When the valve-element unit 18 is present in the second stop position, the second U-turn passage 22 makes the port pD and the port pE be in communication with each other.

When the valve-element unit 18 is present in the first stop position, the first straight passage 36 does not make any of the ports be in communication with each other. When the valve-element unit 18 is present in the second stop position, the first straight passage 36 makes the port pB among the plurality of ports pB, pA, and pF disposed in the first valve seat 13 and the port pC among the plurality of ports pC, pD, and pE disposed in the second valve seat 15 be in communication with each other.

When the valve-element unit 18 is present in the first stop position, the second straight passage 46 makes the port pF among the plurality of ports pB, pA, and pF disposed in the first valve seat 13 and the port pE among the plurality of ports pC, pD, and pE disposed in the second valve seat 15 be in communication with each other. When the valve-element unit 18 is present in the second stop position, the second straight passage 46 does not make any of the ports be in communication with each other.

The piston section 50 includes a first piston 51, a second piston 52, and the bracket 53.

The first piston 51 is disposed between the end cover 11 disposed on one end portion of the valve housing 10, and the first valve seat 13 and the second valve seat 15. The first working chamber 57 is formed between the first piston 51 and the end cover 11. The second piston 52 is disposed between the end cover 12 disposed on the other end portion of the valve housing 10, and the first valve seat 13 and the second valve seat 15. The second working chamber 58 is formed between the second piston 52 and the end cover 12. The valve chamber 59 is formed between the first piston 51 and the second piston 52. In the valve chamber 59, the first valve seat 13, the second valve seat 15, and the valve-element unit 18 are disposed.

As illustrated in Figs. 5A, 5B, and 5C, the metallic bracket 53 includes a bracket body 54 having a rectangular plate shape and piston mounting pieces 55 and 56 that are provided by bending both end portions of the bracket body 54, the bracket body 54 and the piston mounting pieces 55 and 56 being integral with each other. The first piston 51 is mounted on the piston mounting piece 55. The second piston 52 is mounted on the piston mounting piece 56. The bracket 53 couples the first piston 51 and the second piston 52 to each other.

The bracket body 54 has a substantially rectangular U-turn-valve-element holding hole 54a into which the U-turn valve element 20 is inserted. On the periphery corresponding to the short sides of the U-turn-valve-element holding hole 54a, a plurality of U-turn-valve-element pushing pieces 54b that are bent such that respective tips are directed to the second valve seat 15 are disposed. Due to the plurality of U-turn-valve-element pushing pieces 54b being bent to be directed to the second valve seat 15, the U-turn-valve-element pushing pieces 54b are enabled to push, when the U-turn valve element 20 slides, portions of a side surface 20c of the U-turn valve element 20 close to the second valve seat 15. Therefore, the channel switching valve 1 is enabled to suppress behavior (stick slip and the like) of the end surface 20b of the U-turn valve element 20 floating from the second valve seat surface 16. The length of each of the U-turn-valve-element pushing pieces 54b is set to a length that does not cause the tips thereof to be in contact with the projections 23 and 24. Consequently, the channel switching valve 1 is enabled to more effectively suppress the U-turn valve element 20 from floating from the second valve seat surface 16 and to enhance durability thereof, compared with a configuration in which, for example, the U-turn-valve-element pushing pieces 54b push portions of the side surface 20c of the U-turn valve element 20 far from the second valve seat 15. The channel switching valve 1 is also enabled to suppress generation of an abnormal noise caused by stick slip.

The bracket body 54 has two circular straight-valve-element holding holes 54c and 54d that are disposed with the U-turn-valve-element holding hole 54a interposed therebetween in the direction of the axis L. The first straight valve element 30 is inserted into the straight-valve-element holding hole 54c. The second straight valve element 40 is inserted into the straight-valve-element holding hole 54d. The bracket body 54 holds the U-turn valve element 20 and the first straight valve element 30 with a space interposed therebetween. Similarly, the bracket body 54 holds the U-turn valve element 20 and the second straight valve element 40 with a space interposed therebetween.

The pilot section 60 is constituted by, for example, a solenoid-type channel switching valve. The pilot section 60 switches connection of the first working chamber 57 and the second working chamber 58, and the pipe joint A and the pipe joint D by switching connection of thin pipes 71 to 74. The pilot section 60 thereby controls refrigerant pressures in the first working chamber 57 and the second working chamber 58. Consequently, in the channel switching valve 1, a difference between the refrigerant pressures in the first working chamber 57 and the second working chamber 58 causes the piston section 50 to move to the side of one of the first working chamber 57 and the second working chamber 58. Along with the movement of the piston section 50, the valve-element unit 18 held by the bracket 53 is slid in the direction of the axis L. The valve-element unit 18 is then positioned in the first stop position illustrated in Fig. 1 or the second stop position illustrated in Fig. 2.

Next, one example of the operation of the aforementioned channel switching valve 1 will be described.

During a cooling operation, the channel switching valve 1 connects the thin pipe 71 and the thin pipe 72 to each other and connects the thin pipe 73 and the thin pipe 74 to each other by the pilot section 60. Consequently, the pipe joint A and the second working chamber 58 are connected to each other and the pipe joint D and the first working chamber 57 are connected to each other, which decreases the refrigerant pressure in the first working chamber 57 and increases the refrigerant pressure in the second working chamber 58. A difference between the refrigerant pressures causes the piston section 50 to move to one end side of the valve housing 10, and, as illustrated in Fig. 1, the valve-element unit 18 is positioned in the first stop position.

In the first stop position, the first U-turn passage 21 makes the port pA and the port pB be in communication with each other, the second U-turn passage 22 makes the port pC and the port pD be in communication with each other, and the second straight passage 46 makes the port pE and the port pF be in communication with each other. Consequently, the refrigerant flows in following (1) to (15) in this order.
(1) the discharge portion of the compressor
(2) the pipe joint A (port pA)
(3) the first U-turn passage 21
(4) the pipe joint B (port pB)
(5) the outdoor heat exchanger
(6) the cooling expansion valve
(7) the pipe joint E (port pE)
(8) the second straight passage 46
(9) the pipe joint F (port pF)
(10) the indoor heat exchanger
(11) the heating expansion valve
(12) the pipe joint C (port pC)
(13) the second U-turn passage 22
(14) the pipe joint D (port pD)
(15) the suction portion of the compressor

During a heating operation, the channel switching valve 1 connects the thin pipe 71 and the thin pipe 74 to each other and connects the thin pipe 73 and the thin pipe 72 to each other by the pilot section 60. Consequently, the pipe joint A and the first working chamber 57 are connected to each other and the pipe joint D and the second working chamber 58 are connected to each other, which increases the refrigerant pressure in the first working chamber 57 and decreases the refrigerant pressure in the second working chamber 58. A difference between the refrigerant pressures causes the piston section 50 to move to the other end side of the valve housing 10, and, as illustrated in Fig. 2, the valve-element unit 18 is positioned in the second stop position.

In the second stop position, the first U-turn passage 21 makes the port pA and the port pF be in communication with each other, the second U-turn passage 22 makes the port pE and the port pD be in communication with each other, and the first straight passage 36 makes the port pC and the port pB be in communication with each other. Consequently, the refrigerant flows in following (1) to (15) in this order.
(1) the discharge portion of the compressor
(2) the pipe joint A (port pA)
(3) the first U-turn passage 21
(4) the pipe joint F (port pF)
(5) the indoor heat exchanger
(6) the heating expansion valve
(7) the pipe joint C (port pC)
(8) the first straight passage 36
(9) the pipe joint B (port pB)
(10) the outdoor heat exchanger
(11) the cooling expansion valve
(12) the pipe joint E (port pE)
(13) the second U-turn passage 22
(14) the pipe joint D (port pD)
(15) the suction portion of the compressor

During a cooling operation and during a heating operation, a high-pressure refrigerant flowing from the discharge portion of the compressor flows in the first U-turn passage 21 and the valve chamber 59, and a low-pressure refrigerant flowing toward the suction portion of the compressor flows in the second U-turn passage 22. Therefore, forces are applied to the U-turn valve element 20 from the high-pressure refrigerant and the low-pressure refrigerant.

In the first straight passage 36 and the second straight passage 46, an intermediate-pressure refrigerant flows. The high-pressure refrigerant flowing from the discharge portion of the compressor flows into the valve chamber 59. Therefore, forces are applied to the first straight valve element 30 and the second straight valve element 40 from the high-pressure refrigerant and the intermediate-pressure refrigerant.

It is thus possible to avoid each of the U-turn valve element 20, the first straight valve element 30, and the second straight valve element 40 from being applied with forces from the three refrigerants having different pressures.

As above, according to the channel switching valve 1 of the present embodiment, the valve-element unit 18 includes the U-turn valve element 20, and the first straight valve element 30 and the second straight valve element 40, which are each separate from the U-turn valve element 20. The U-turn valve element 20 includes the first U-turn passage 21 that makes two ports among the plurality of ports pB, pA, and pF disposed in the first valve seat 13 be in communication with each other, and the second U-turn passage 22 that makes two ports among the plurality of ports pC, pD, and pE disposed in the second valve seat 15 be in communication with each other. The first straight valve element 30 includes the first straight passage 36 that makes the port pC and the port pB be in communication with each other when the valve-element unit 18 slides to the side of the second working chamber 58. The second straight valve element 40 includes the second straight passage 46 that makes the port pE and the port pF be in communication with each other when the valve-element unit 18 slides to the side of the first working chamber 57. As a result of configuring as above, it is possible to avoid the U-turn valve element 20, the first straight valve element 30, and the second straight valve element 40 from being applied with forces from the three refrigerants having different pressures. Therefore, it is possible to effectively suppress generation of deformation in the U-turn valve element 20, the first straight valve element 30, and the second straight valve element 40 and generation of imbalance between the forces pressing these valve elements against the first valve seat 13 and the second valve seat 15. Consequently, the channel switching valve 1 increases the sealing performance thereof and is enabled to effectively suppress valve leaking.

The first straight valve element 30 and the second straight valve element 40 are disposed with the U-turn valve element 20 interposed therebetween in the direction of the axis L. As a result of configuring as above, it is possible to reliably make the ports disposed in the first valve seat 13 and the ports disposed in the second valve seat 15 be in communication with each other when the valve-element unit 18 is present in either of the first stop position and the second stop position.

A space is disposed between the U-turn valve element 20 and the first straight valve element 30, and a space is disposed between the U-turn valve element 20 and the second straight valve element 40. As a result of configuring as above, it is possible, for example, when the U-turn valve element 20 is deformed, to avoid the influence of the deformation from being exerted on the first straight valve element 30 and the second straight valve element 40.

The U-turn valve element 20 is spaced from the first valve seat 13 and disposed in contact with the second valve seat 15. As a result of configuring as above, the U-turn valve element 20 is enabled to have a simple configuration, compared with a configuration in which the U-turn valve element 20 is in contact with both the first valve seat 13 and the second valve seat 15, because only contact with respect to the second valve seat 15 is required to be ensured.

The channel switching valve 1 includes the bracket 53 that integrally holds the U-turn valve element 20, the first straight valve element 30, and the second straight valve element 40. The bracket 53 is disposed between the first valve seat 13 and the second valve seat 15 in the direction of the axis L and includes the plurality of U-turn-valve-element pushing pieces 54b projecting to be directed to the second valve seat 15. As a result of configuring as above, the U-turn-valve-element pushing pieces 54b are enabled to push portions of the side surface 20c of the U-turn valve element 20 close to the second valve seat 15 when the U-turn valve element 20 slides. Consequently, the channel switching valve 1 is enabled to more effectively suppress the U-turn valve element 20 from floating from the second valve seat 15, compared with a configuration in which, for example, the bracket 53 pushes portions of the side surface 20c of the U-turn valve element 20 far from the second valve seat 15. Therefore, the channel switching valve 1 is enabled to enhance durability thereof.

The first straight valve element 30 includes the outer cylinder member 31, the cylindrical male-type member 32, the cylindrical female-type member 33, and the spring member 35. The male-type member 32 is housed in one end side (the upper end side in Fig. 1 and Fig. 2) of the outer cylinder member 31. The male-type member 32 is in contact with the first valve seat 13. The female-type member 33 is housed in the other end side (the lower end side in Fig. 1 and Fig. 2) of the outer cylinder member 31. The female-type member 33 constitutes the first straight passage 36 in cooperation with the male-type member 32. The female-type member 33 is in contact with the second valve seat 15. The spring member 35 is disposed between the male-type member 32 and the female-type member 33. As a result of configuring as above, in the first straight valve element 30, the spring member 35 presses the male-type member 32 against the first valve seat 13 and presses the female-type member 33 against the second valve seat 15. Therefore, it is possible to effectively seal, with respect to the valve chamber 59, the first straight passage 36 constituted by the male-type member 32 and the female-type member 33. A similar effect is exerted in the second straight valve element 40.

In the first straight valve element 30, a gap between the male-type member 32 and the female-type member 33 is sealed by the O-ring 34. In accordance with the inner-diameter area of the O-ring 34, the pressure receiving area of the male-type member 32, the pressure receiving area of the female-type member 33, and the relation between the inside pressure and the outside pressure of the first straight valve element 30, each of the male-type member 32 and the female-type member 33 is applied with a load in the axial direction (the up-down direction in Fig. 3) thereof. In the present embodiment, the seal diameter of the O-ring 34 is set such that each of the pressure receiving area of the male-type member 32 and the pressure receiving area of the female-type member 33 is larger than the inner-diameter area of the O-ring 34 to cause a load in a direction in which the male-type member 32 and the female-type member 33 are away from each other in the axial direction is applied thereto. The same applies to the second straight valve element 40.

In the aforementioned embodiment, the channel switching valve 1 is configured to include the first straight valve element 30 and the second straight valve element 40; however, the channel switching valve 1 may be configured to include only one of the straight valve elements. The channel switching valve 1 may have at least one straight valve element.

In the aforementioned embodiment, a six-way switching valve has been described. The channel switching valve according to the present invention is, however, not limited thereto. The number of ports to be switched is selectable as long as not conflicting with the object of the present invention; for example, the channel switching valve according to the present invention may be a five-way switching valve or the like in which the number of ports is five.

Although embodiments of the present invention have been described above, the present invention is not limited by these embodiments. The aforementioned embodiments to which addition, deletion, and design change of constituents are applied, as appropriate, by a person skilled in the art, and the features of the embodiments combined together, as appropriate, are also included in the scope of the present invention as long as not conflicting with the appended claims.

### REFERENCE SIGNS LIST

1: channel switching valve
10: valve housing
11, 12: end cover
13: first valve seat
14: first valve seat surface
15: second valve seat
16: second valve seat surface
18: valve-element unit
20: U-turn valve element
20a, 20b: end surface
20c: side surface
21: first U-turn passage
22: second U-turn passage
23, 24: projection
30: first straight valve element
31: outer cylinder member
32: male-type member (first valve member)
33: female-type member (second valve member)
34: O-ring
35: spring member
40: second straight valve element
41: outer cylinder member
42: male-type member
43: female-type member
44: O-ring
45: spring member
50: piston section
51: first piston
52: second piston
53: bracket
54: bracket body
54a: U-turn-valve-element holding hole
54b: U-turn-valve-element pushing piece
54c, 54d: straight-valve-element holding hole
55, 56: piston mounting piece
57: first working chamber
58: second working chamber
59: valve chamber
60: pilot section
pA, pB, pC, pD, pE, pF: port
A, B, C, D, E, F: pipe joint
L: axis

## Claims

1. A channel switching valve (1) comprising:
a cylindrical valve housing (10);
a first valve seat (13) disposed in the valve housing (10);
a second valve seat (15) disposed in the valve housing (10) to face the first valve seat (13);
and a valve-element unit (18) disposed between the first valve seat (13) and the second valve seat (15) so as to be slidable in a direction of an axis (L),
wherein the valve-element unit (18) includes a U-turn valve element (20) and a straight valve element (30, 40) separate from the U-turn valve element (20),
wherein the U-turn valve element (20) includes a first U-turn passage (21) that makes two ports among a plurality of ports (pA, pB, pF) disposed in the first valve seat (13) be in communication with each other and a second U-turn passage (22) that makes two ports among a plurality of ports (pC, pD, pE) disposed in the second valve seat (15) be in communication with each other, and
wherein the straight valve element (30, 40) includes a straight passage (36, 46) that makes a port among the plurality of ports (pB, pF) disposed in the first valve seat (13) and a port among the plurality of ports (pC, pE) disposed in the second valve seat (15) be in communication with each other;
wherein the U-turn valve element (20) is spaced from the first valve seat (13) and disposed in contact with the second valve seat (15);
wherein the channel switching valve (1) is **characterized by** comprising:
a bracket (53) that holds the U-turn valve element (20) and the straight valve element (30, 40),
wherein the bracket (53) is disposed between the first valve seat (13) and the second valve seat (15) in the direction of the axis (L) and includes a U-turn-valve-element pushing piece (54b) projecting to be directed to the second valve seat (15).

2. The channel switching valve (1) according to Claim 1, wherein the straight valve element (30, 40) includes two straight valve elements disposed with the U-turn valve element (20) interposed therebetween in the direction of the axis (L).

3. The channel switching valve (1) according to Claim 1 or Claim 2, wherein a space is disposed between the U-turn valve element (20) and the straight valve element (30, 40).

4. The channel switching valve (1) according to any one of Claims 1 to 3,
wherein the straight valve element (30, 40) includes
an outer cylinder member (31,41),
a cylindrical first valve member (32,42) housed in a first end side of the outer cylinder member (31,41) and in contact with the first valve seat (13),
a cylindrical second valve member (33,43) housed in a second end side of the outer cylinder member (31,41) and constituting the straight passage (36, 46) in cooperation with the first valve member (32,42), the cylindrical second valve member (33,43) being in contact with the second valve seat (15), and
a spring member (35,45) disposed between the first valve member (32,42) and the second valve member (33,43).

## Patentansprüche

1. Ein Kanalumschaltventil (1) umfassend:
ein zylindrisches Ventilgehäuse (10);
einen ersten Ventilsitz (13), der im Ventilgehäuse (10) angeordnet ist;
einen zweiten Ventilsitz (15), der im Ventilgehäuse (10) gegenüber dem ersten Ventilsitz (13) angeordnet ist;
und eine Ventilelementeinheit (18), die zwischen dem ersten Ventilsitz (13) und dem zweiten Ventilsitz (15) verschiebbar in Richtung einer Achse (L) angeordnet ist,
wobei die Ventilelementeinheit (18) ein Wendeventilelement (20) und ein vom Wendeventilelement (20) getrenntes gerades Ventilelement (30, 40) umfasst,
wobei das Wendeventilelement (20) einen ersten Wendedurchgang (21) umfasst, der zwei Ventilöffnungen aus einer Vielzahl im ersten Ventilsitz (13) angeordneter Ventilöffnungen (pA, pB, pF) miteinander verbindet, und einen zweiten Wendedurchgang (22) umfasst, der zwei Ventilöffnungen aus einer Vielzahl im zweiten Ventilsitz (15) angeordneter Ventilöffnungen (pC, pD, pE) miteinander verbindet, und
wobei das gerade Ventilelement (30, 40) einen geraden Durchgang (36, 46) umfasst, der eine Ventilöffnung aus der Vielzahl im ersten Ventilsitz (13) angeordneter Ventilöffnungen (pB, pF) mit einer Ventilöffnung aus der Vielzahl im zweiten Ventilsitz (15) angeordneter Ventilöffnungen (pD, pE) miteinander verbindet;
wobei das Wendeventilelement (20) vom ersten Ventilsitz (13) beabstandet ist und in Berührung mit dem zweiten Ventilsitz (15) angeordnet ist;
wobei das Kanalumschaltventil (1) **dadurch gekennzeichnet ist, dass** es umfasst:
eine Stütze (53), die das Wendeventilelement (20) und das gerade Ventilelement (30, 40) hält,
wobei die Stütze (53) zwischen dem ersten Ventilsitz (13) und dem zweiten Ventilsitz (15) in Richtung der Achse (L) angeordnet ist und ein Wendeventilelement-Druckstück (54b), das in Richtung des zweiten Ventilsitzes (15) vorspringt, umfasst.

2. Das Kanalumschaltventil (1) nach Anspruch 1, wobei das gerade Ventilelement (30, 40) zwei gerade Ventilelemente umfasst, die mit dem in Achsrichtung (L) dazwischen angeordneten Wendeventilelement (20) angeordnet sind.

3. Das Kanalumschaltventil (1) nach Anspruch 1 oder 2, wobei zwischen dem Wendeventilelement (20) und dem geraden Ventilelement (30, 40) ein Abstand vorhanden ist.

4. Das Kanalumschaltventil (1) nach einem der Ansprüche 1 bis 3,
wobei das gerade Ventilelement (30, 40) umfasst:
ein äußeres Zylinderelement (31, 41),
ein erstes zylindrisches Ventilelement (32, 42), das in einer ersten Endseite des äußeren Zylinderelements (31, 41) in Berührung mit dem ersten Ventilsitz (13) eingebracht ist,
ein zweites zylindrisches Ventilelement (33, 43), das in einer zweiten Endseite des äußeren Zylinderelements (31, 41) eingebracht ist und zusammen mit dem ersten Ventilelement (32, 42) den geraden Durchgang (36, 46) bildet, welches zweite zylindrische Ventilelement (33, 43) in Berührung mit dem zweiten Ventilsitz (15) steht, und
ein Federelement (35, 45), das zwischen dem ersten Ventilelement (32, 42) und dem zweitem Ventilelement (33, 43) angeordnet ist.

## Revendications

1. Vanne de commutation de canal (1) comportant :
un boîtier de vanne cylindrique (10),
un premier siège de vanne (13) disposé dans le boîtier de vanne (10),
un second siège de vanne (15) disposé dans le boîtier de vanne (10) pour faire face au premier siège de vanne (13),
et une unité d'élément de vanne (18) disposée entre le premier siège de vanne (13) et le second siège de vanne (15) de manière à pouvoir coulisser dans une direction d'un axe (L),
dans laquelle l'unité d'élément de vanne (18) inclut un élément de vanne en demi-tour (20) et un élément de vanne droit (30, 40) séparé de l'élément de vanne en demi-tour (20),
dans laquelle l'élément de vanne en demi-tour (20) inclut un premier passage en demi-tour (21) qui met deux orifices parmi une pluralité d'orifices (pA, pB, pF) disposés dans le premier siège de vanne (13) en communication l'un avec l'autre et un second passage en demi-tour (22) qui met deux orifices parmi une pluralité d'orifices (pC, pD, pE) disposés dans le second siège de vanne (15) en communication l'un avec l'autre, et
dans laquelle l'élément de vanne droit (30, 40) inclut un passage droit (36, 46) qui met un orifice parmi la pluralité d'orifices (pB, pF) disposés dans le premier siège de vanne (13) et un orifice parmi la pluralité d'orifices (pC, pE) disposés dans le second siège de vanne (15) en communication l'un avec l'autre, et
dans laquelle l'élément de vanne en demi-tour (20) est espacé du premier siège de vanne (13) et disposé en contact avec le second siège de vanne (15),
dans laquelle la vanne de commutation de canal (1) est **caractérisée en ce qu'**elle comporte :
un support (53) qui maintient l'élément de vanne en demi-tour (20) et l'élément de vanne droit (30, 40),
dans laquelle le support (53) est disposé entre le premier siège de vanne (13) et le second siège de vanne (15) dans la direction de l'axe (L) et inclut une pièce de poussée d'élément de vanne en demi-tour (54b) faisant saillie pour être dirigée vers le second siège de vanne (15).

2. Vanne de commutation de canal (1) selon la revendication 1, dans laquelle l'élément de vanne droit (30, 40) inclut deux éléments de vanne droits disposés avec l'élément de vanne en demi-tour (20) intercalé entre ceux-ci dans la direction de l'axe (L) .

3. Vanne de commutation de canal (1) selon la revendication 1 ou la revendication 2, dans laquelle un espace est disposé entre l'élément de vanne en demi-tour (20) et l'élément de vanne droit (30, 40) .

4. Vanne de commutation de canal (1) selon l'une quelconque des revendications 1 à 3,
dans laquelle l'élément de vanne droit (30, 40) inclut
un élément de cylindre extérieur (31, 41),
un premier élément de vanne cylindrique (32, 42) reçu dans un premier côté d'extrémité de l'élément de cylindre extérieur (31, 41) et en contact avec le premier siège de vanne (13),
un second élément de vanne cylindrique (33, 43) reçu dans un second côté d'extrémité de l'élément de cylindre extérieur (31, 41) et constituant le passage droit (36, 46) en coopération avec le premier élément de vanne (32, 42), le second élément de vanne cylindrique (33, 43) étant en contact avec le second siège de vanne (15), et
un élément à ressort (35, 45) disposé entre le premier élément de vanne (32, 42) et le second élément de vanne (33, 43).
